# EUROPEAN PATENT APPLICATION

(11) **EP 1 102 171 A2**
(43) Date of publication of application: **23.05.2001**
(21) Application number: 00125224.6
(22) Date of filing: 22.11.2000
(51) Int. Cl.: G06F 13/38

(54) **Universal serial bus network peripheral device**

(30) Priority: 22.11.1999 US 166889 P; 30.10.2000 US 702230
(71) Applicant: Texas Instruments Incorporated, Dallas, Texas 75251 (US)
(72) Inventor: Christison, Gregory Lee, McKinney, Texas 75070 (US); Karlsson, Magnus G., McKinney, Texas 75070 (US); Humphrey, Norayda N., McKinney, Texas 75070 (US)
(74) Representative: Schwepfinger, Karl-Heinz, Dipl.-Ing.

(57) **Abstract**

A USB peripheral interface function (28), such as a modem (14), for scheduling communications from a host computer (12) over a communications facility is disclosed. A USB interface device (30) contains a shared memory (44) in which isochronous and bulk endpoints (240, 240') are established, and at which the message data are stored by the host computer (12) for transmission. Priority scheduling logic (137) in a transmit controller (132) selects which of the endpoints (240, 240') are to be accessed, for retrieval and transmission of the message data, according to a priority scheme. For connection-less communications, such as those according to IP protocols, a priority scheme is followed by the priority scheduling logic (137). For Asynchronous Transfer Mode (ATM) communications according to various Quality of Service (QoS) categories, isochronous endpoints (240') are associated with delay-sensitive messages such as those of the Constant Bit Rate (CBR) category, while bulk endpoints (240') are associated with non-delay-sensitive messages such as those of the Variable Bit Rate (VBR), Available Bit Rate (ABR), and Unspecified Bit Rate (UBR) categories.

## Description

### CROSS-REFERENCE TO RELATED APPLICATIONS

This application claims the benefit, under 35 U.S.C. §119(e)(1), of U.S. Provisional Application No. 60/166,889 (TI-29867PS), filed November 22, 1999, and incorporated herein by this reference.

### BACKGROUND OF THE INVENTION

This invention is in the field of data communications, and is more specifically directed to data communications over a network by way of a Universal Serial Bus (USB) peripheral device.

Universal Serial Bus ("USB") is a recently-developed technology established by a joint effort of various companies, and standardized in *Universal Serial Bus Specification, Revision 1.1,* September 23, 1998, incorporated herein by reference. The USB Specification is directed to improving the user-friendliness of computers and their peripheral devices. In a USB system, peripheral devices are coupled to the host personal computer or workstation computer in a tiered-star topology over the USB bus. The USB bus may be present internally in the host computer, but more typically will be physically embodied by standardized external USB ports and cabling. In this way, external USB peripheral devices will not occupy conventional specialized serial and parallel ports. Logically, the USB bus is mastered by a USB host resident in the host personal computer or workstation, with the USB peripherals operating as slave devices on that bus.

The USB technology provides significant advantages to the computer system user, including the ability to connect up to 127 peripheral devices, in a "daisy-chain" tiered-star topology, to a single USB port on the host computer. The USB technology also permits the user to connect and disconnect USB peripheral devices to and from the USB system without requiring system power-down, and generally with little or no configuration input required from the user. This capability provides considerable flexibility and potential cost reduction in comparison to many conventional systems, particularly those which can only support one peripheral device per port. USB systems can also easily integrate various functions such as data, voice, and video, through a single serial-data transfer protocol, without requiring add-on cards and their associated mainboard slots. Additionally, the master-slave arrangement permits the relatively high processing capacity of the host computer to perform and manage much of the data processing required for the peripheral function.

A network adapter is one type of peripheral device now being implemented as a USB device. The USB network adapter effects data communications over a communications network, such as a local area network (LAN) located within an office, a wide area network (WAN) for proprietary communications among remote locations, or the public network referred to as the Internet.

A specific type of network adapter is a modulator/demodulator, or "modem", which encodes and decodes data communicated as a modulated signal over a communications facility, such as a twisted-pair telephone line. Conventional voice-band modems have long been used for data communication over conventional telephone lines by way of modulated analog signals carried at audible frequencies. A relatively recent technology by way of which remote, home, or small office workstations can now connect to the Internet is referred to in the art as digital subscriber loop ("DSL"). DSL refers generically to a public network technology that delivers relatively high bandwidth, far greater than current voice modem data rates, over conventional telephone company copper wiring at limited distances.

Using either a voice-band or a DSL modem, conventional computers can establish and support multiple communications "sessions", according to conventional communications protocols. Connection-oriented networks, such as operating under Asynchronous Transfer Mode (ATM) communications, control multiple sessions according to one of several priority schemes. For example, some of the multiple channels carrying the communications sessions are set to higher priorities than other channels. The available bandwidth is then assigned according to the channel priority. Bandwidth may be awarded strictly on a priority basis, or on a weighted basis so that each channel is awarded some bandwidth but in an amount that varies with its priority. Another priority scheme is simply a round-robin scheme, in which each channel receives bandwidth in turn.

A common "connection-less" communications approach is referred to as packet-based data communications, in which certain network nodes operate as concentrators to receive and store portions of messages, referred to as packets, that are issued by the sending units. Examples of connection-less communications operate according to the well-known IP protocols. These packets are then routed to a destination concentrator, which in turn forwards the message to the receiving unit that is indicated by the packet address. The size of the packet refers to the maximum upper limit of information that can be communicated between concentrators (i.e., between the store and forward nodes), and is typically a portion of a message or file. Each packet includes header information relating to the source and destination network addresses, permitting proper routing of the message packet. Packet switching with short length packets ensures that routing paths are not unduly dominated by long individual messages, and thus reduces transmission delay in the store-and-forward nodes. Packet-based data communications technology has enabled communications to be carried out at high data rates, up to and exceeding hundreds of megabits per second.

A well-known fast packet switching protocol, which combines the efficiency of packet switching with the predictability of circuit switching, is Asynchronous Transfer Mode (generally referred to as "ATM"). According to ATM protocols, message packets are subdivided into cells of fixed length and organization, regardless of message length or data type (i.e., voice, data, or video). Each ATM cell is composed of fifty-three bytes, five of which are dedicated to the header and the remaining forty-eight of which serve as the payload. According to current ATM protocols, ATM packets consist of up to sixty-four fixed-length ATM cells. The fixed size of the ATM cells enables packet switching to be implemented in hardware, as opposed to software, resulting in transmission speeds in the gigabits-per-second range. In addition, the switching of cells rather than packets permits scalable user access to the network, with data rates ranging from a few Mbps to several Gbps.

The multiple "virtual connections" over which a computer may effect ATM communications can be prioritized to more efficiently utilize available bandwidth. For example, certain types of communications have time-sensitivity and require real-time fidelity, while others do not. An example of a time-sensitive communication is Voice-Over-Internet Protocol (VoIP), by way of which voice and data travel simultaneously over a single network line. On the other hand, e-mail retrieval and background downloads of large files, do not require real-time transmission capability. Conventional traffic management techniques use feedback signals between two network nodes to govern the channel data rate, so that bandwidth priority may be granted to time-sensitive traffic relative to delay-tolerant traffic.

Current ATM traffic management schemes utilize various transmission categories to assign bandwidth. A high priority category is Constant Bit Rate (CBR), in which the transmission is carried out at a "guaranteed" constant rate. Variable Bit Rate (VBR) transmission provides a next higher priority of service, with one VBR category for real-time information and another for non-real-time information. The Available Bit Rate (ABR) service class dynamically controls channel transmission rate in response to current network conditions, and within certain transmission parameters that are specified upon opening of the transmission channel (i.e., in the traffic "contract"). Finally, the lowest priority category is Unspecified Bit Rate (UBR), in which data are transmitted by the source with no guarantee of transmission speed.

A network element capable of prioritizing its data transmissions, whether according to a priority scheme in a connection-less network or according to connection contract requirements in the virtual connection-oriented ATM network, is commonly referred to as having support for Quality of Service (QoS). QoS capability at the message source necessarily requires that the source element comprehend its various transmission channels and corresponding priorities, and then schedule transmissions according to the channel traffic, available bandwidth, and current network status. In conventional personal computer and workstation systems, the host processor is burdened with scheduling its transmissions for QoS support. This additional functionality, of course, must compete with the other data processing operations being carried out by the host system.

Additionally, in the case of a USB host system that is effecting ATM QoS scheduling, the ATM packets must be segmented into cells within the host system, prior to the sending of data to the peripheral network adapter over the USB. This segmentation function, as well as reassembly of cells into packets upon receipt of an ATM message, is conventionally carried out by the USB host.

### BRIEF SUMMARY OF THE INVENTION

It is therefore an object of the present invention to provide a USB peripheral device that performs Quality of Service (QoS) scheduling of communications.

It is a further object of the present invention to provide such a peripheral device in which USB endpoint communications and QoS processing are simultaneously controlled.

It is a further object of the present invention to provide such a peripheral device in which the efficiency of USB communications is improved.

Other objects and advantages of the present invention will be apparent to those of ordinary skill in the art having reference to the following specification together with its drawings.

The present invention may be implemented into a USB peripheral device, in which QoS scheduling logic is embodied within the USB interface. Connection-based packets and connection-less messages, as the case may be, are forwarded by the USB host to USB endpoints in shared memory of the USB peripheral. The USB endpoints are configured, upon initiation of the communications session, according to their QoS priority category. The scheduling logic controls the DMA retrieval and transmission of the message data according to the appropriate traffic management routine.

### BRIEF DESCRIPTION OF THE SEVERAL VIEWS OF THE DRAWING

Figure 1a is an electrical diagram, in block form, of a USB-based system into which the preferred embodiment of the present invention is incorporated.

Figure 1b is an electrical diagram, in block form, of the system of Figure 1a, illustrating the USB interconnections among the various elements therein.

Figure 2 is an electrical diagram, in block form, of a USB-based peripheral device according to the preferred embodiment of the present invention.

Figure 3 is an electrical diagram, in block form, of an exemplary architecture of the USB-to-DSP (digital signal processor) interface in the device of Figure 2 according to the preferred embodiment of the present invention.

Figure 4 is an electrical diagram, in block form, of the digital signal processor interface and ATM acceleration logic in the USB-to-DSP interface of Figure 3, according to the preferred embodiment of the invention.

Figure 5 is an electrical diagram, in schematic form, of the transmit controller in the digital signal processor interface and ATM acceleration logic of Figure 4, according to the preferred embodiment of the invention.

Figure 6a is an electrical diagram, in block form, of the arrangement of endpoints in shared memory in conjunction with the transmit controller and priority scheduler, for carrying out connection-less transmissions according to a first preferred embodiment of the invention.

Figure 6b is an electrical diagram, in block form, of the arrangement of endpoints in shared memory in conjunction with the transmit controller and priority scheduler, for carrying out ATM communications transmissions according to a second preferred embodiment of the invention.

Figures 7a and 7b are flow diagrams illustrating the operation of the transmit controller and priority scheduler of Figure 6a in scheduling connection-less transmissions under alternative priority schemes, according to the first preferred embodiment of the invention.

Figure 8 is a flow diagram illustrating the operation of the transmit controller and priority scheduler of Figure 6b in scheduling ATM transmissions, according to the second preferred embodiment of the invention.

Figure 9 is a flow diagram illustrating the operation of the segmentation logic in the ATM transmit controller of Figure 5 according to the second preferred embodiment of the invention.

Figure 10 is a flow diagram illustrating the operation of the segmentation logic in the ATM transmit controller of Figure 5 in generating and transmitting an ATM cell header in the method of Figure 9.

### DETAILED DESCRIPTION OF THE INVENTION

As will be apparent from the following description, the present invention may be beneficially used in connection with many different alternative system implementations. It is therefore contemplated that those skilled in the art having reference to this description will be readily able to implement the present invention in many alternative realizations, over a wide range of electronic functions and systems. Accordingly, it will be understood that the following description is provided by way of example only.

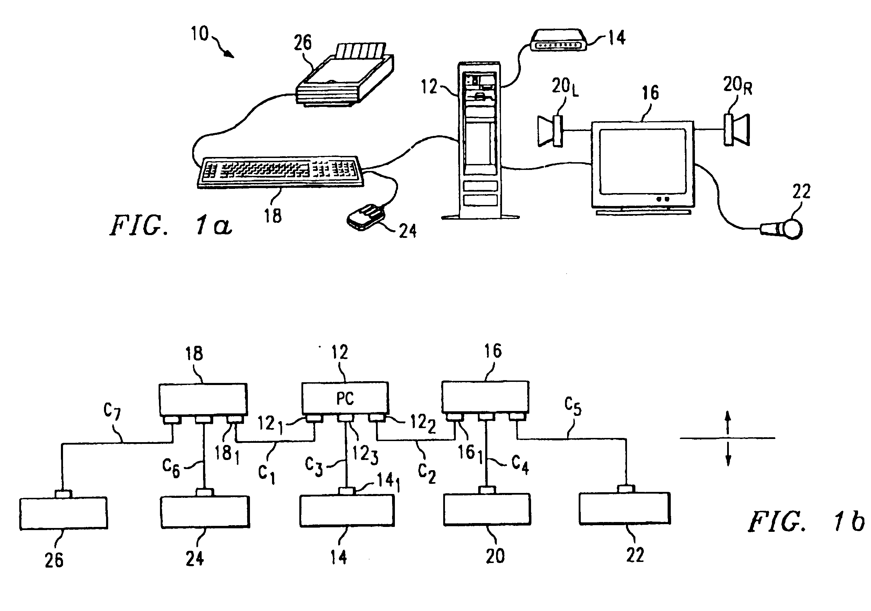

Figure 1a illustrates an exemplary USB system 10 into which the preferred embodiments may be implemented. System 10 includes USB host 12 which, in the present example, is a personal computer ("PC"). The central processing unit (not separately shown) in USB host 12 loads and executes USB device driver software in a manner that is transparent to the PC user. These device drivers support the operation of the external USB peripheral devices in system 10

As shown in Figures la and lb, USB peripheral devices may be directly connected to USB host 12, or may be indirectly coupled to USB host 12 through other USB devices that are directly connected to USB host 12. In the example of system 10, external modem 14, monitor 16, and keyboard 18 are directly connected to USB ports of USB host 12, while other USB peripheral devices in system 10 are coupled to USB host 12 via one of these directly-connected USB devices. For example, speakers 20_{L} and 20_{R} and microphone 22 are connected to USB host 12 by way of a USB hub function residing in monitor 16, which in turn has a USB connection to host 12. Typically, video data displayed by monitor 16 is not communicated thereto by host 12 over a USB connection, but is instead communicated over a separate standard video connection (not shown in Figure 1a and 1b). Similarly, mouse 24 and scanner 26 are coupled to USB host 12 via keyboard 18, which itself is a USB device connected to a USB port of host 12. While each of the illustrated peripheral devices in system 10 is shown as a USB device, in the alternative only a subset of these devices may be USB devices.

Figure 1b is a corresponding electrical diagram illustrating the logical hub and function hierarchy of the USB connections in system 10. The USB hubs in system 10 include USB host 12 itself, as well as keyboard 18 and monitor 16 through which other USB functions are coupled to the USB host. Each USB hub in system 10 effectively serves as a wiring concentrator for connecting one or more other USB devices into the overall USB hierarchy. The hub provided by USB host 12 has one or more downstream ports to which USB devices may be connected. Each peripheral USB hub in turn includes at least one upstream port through which it is connected either directly to the USB host or to another hub, and one or more downstream ports to which other USB devices may be connected.

Externally from USB host 12, all USB connections are made using USB cables. Each USB cable includes four conductors, two for serial data communications with all USB devices, and the other two for providing power to bus-powered USB devices. The upstream and downstream connectors of a USB cable physically differ from one another to ensure proper orientation. In the example of system 10, port 12₁ of USB host 12 is connected to port 18₁ of keyboard 18 by USB cable C₁, and port 12₂ is connected to port 16₁ of monitor 16 by USB cable C₂. In modem USB computer systems, monitor 16 typically serves as a USB hub in parallel with its primary function as a display device, and receives its video display signals from host 12 over a direct video display connection and not over the USB connection.

Each of the USB devices connected to a USB hub are referred to in the art as a function, or (perhaps less precisely) a peripheral. In general, a USB function is a USB device that provides a capability to the host. In this example, the USB functions include microphone 22, speakers 20, modem 14, mouse 24, and scanner 26. In addition, a USB device functioning as a hub may also itself serve as a function; keyboard 18 is an example of a device that is both a USB hub and a USB function. Each of the functions is also connected via a standard USB cable to a hub. For example, cable C₃ connects port 14₁ of modem 14 to port 12₃ of USB host 12. The remaining cable connections in system 10 will be evident to those skilled in the art.

Generally, USB host 12 operates as a master and each of the functions always serves as a slave in the USB hierarchy. In this capacity, USB host 12 includes a serial interface engine ("SIE") (not separately shown) that is typically incorporated into a USB controller that effects serial communication of information to and from the USB functions. The USB master function is generally performed by USB host according to three software levels which, from highest to lowest, are: (1) a host controller driver that links the device chosen as the USB host controller to the remaining USB software structure; (2) USB system software that communicates between the host controller driver and client software; and (3) client software associated with each USB function.

Execution of these software levels permit USB host 12 to monitor the network created by the connections of system 10, and detect when a function is added or removed. For example, upon attachment of a function to the network, USB host 12, as the USB master, detects the added function by detecting a change in the resistive load at one of its USB ports. In response, USB host 12 electrically configures a port connection to the newly-added function. USB host 12 then interrogates the function in connection with a four-step process, referred to in the art as enumeration, to identify information about the function and to assign a unique address thereto. Also in connection with this process, or later, USB host 12 may configure the function. Finally, USB host 12 loads the appropriate driver to communicate with the function, following which USB communications proceed according to a USB protocol, as discussed below.

The USB protocol divides the time of communication along the USB bus into one millisecond frames. During each frame, the bandwidth is shared among all devices connected to the USB system, according to subdivisions of the frame referred to as USB packets. The format and length of the USB packets are specified by the USB Specification. In general, USB host 12, as master, begins each frame by communicating a start of frame ("SOF") packet. Thereafter, communications during the frame occur according to a token protocol, in which a transaction between host and a function occurs by the issuance of a token and a response to the issued token. Specifically, USB host 12 issues a token packet having an address specifying one of the functions, and a control state indicating whether the data to be communicated is a read (i.e., from the addressed function to USB host 12) or a write (i.e., from USB host 12 to the addressed function). The address specifically points to an endpoint (or "device endpoint"), which is a uniquely addressable memory location in the USB function that is the source or sink of information in a communication flow between the USB host and the function. The endpoint gets its name from its typical implementation as a location in a first-in-first-out ("FIFO") memory space of the function; data written to the function is written to the end, or endpoint, of a write FIFO, while data read from the function is read from the end, or endpoint, of a read FIFO. Upon receipt of a token, each USB function decodes the address. If the function identifies itself as the destination, the destination function performs the indicated action, generally by receiving or transmitting one or more data packets over the bus. Once the data communication is complete, the destination of the data (which may be either the host or the function) issues a handshake packet to indicate whether the transmission was successful. This handshake indication may be either a positive acknowledgment ("ACK") or a negative acknowledgment ("NAK"). The USB function, as a data destination, may also provide a STALL handshake to indicate that the intended endpoint cannot be written for some reason (e.g., the FIFO is full), or that a control request is not supported.

The USB Specification *(Universal Serial Bus Specification, Revision 1.1,* September 23, 1998) classifies USB data packet transfers into the four categories of transfers, namely control transfers, bulk data transfers, interrupt data transfers, and isochronous data transfers. In conventional systems, each of these transfer types is performed to a like kind of endpoint. The host software association to a particular endpoint is referred to as a "pipe" to that endpoint. In this regard, a pipe can be considered as a software communications channel, using function calls within the USB system software, to send and retrieve information to and from its associated endpoint. For example, where a host communicates an isochronous data packet to a function, the packet is communicated over a pipe to an isochronous endpoint in the function. Similarly, where a host communicates a bulk data packet to a function, the packet is communicated over a pipe to a bulk data endpoint in the function. Finally, while not fully detailed herein, the USB Specification places specific constraints on the data transfer types, specifying the number of bytes permitted per packet, and the number of packet per frame or frames.

Control transfers allow USB host 12 to obtain information about a function, and to change its behavior. Specifically, control transfers communicate configuration, command, and status data between client software in USB host 12 and the corresponding function. For example, USB host 12 uses control transfers to configure a function when it is first attached to system 10. According to the USB specification, each USB function must have a default IN control pipe at endpoint 0, for use by the USB system software to write control information to the function. Each USB device must also have an OUT control pipe and associated endpoint for the output of control and status information to the host. The USB Specification further defines certain requests that can manipulate the state of a function, and defines descriptors for storing information on the device. The USB function may optionally provide additional control pipes and endpoints, for example to accommodate implementation-specific functionality provided by the client software at USB host 12.

Bulk transfers are used to communicate relatively large, delay-tolerant, data blocks. Bulk transfers are unidirectional, so that a given transfer may be only from host to function or function to host. Bidirectional bulk transfer data communication therefore requires both an IN bulk endpoint and an OUT bulk endpoint to be designated in the function, or two pipes to be associated with the same bulk endpoint. Examples of bulk transfers include the communication of data to a printer (not shown), and the forwarding of image data collected by scanner 26 to the host. Typically, the function hardware includes error detection capability, as well as the ability to perform a limited number of retries on error, enhancing the likelihood of successful bulk data transfer at a cost of possibly increasing latency. The bandwidth within a USB frame that is allotted to bulk data will likely depend upon the bus demand for other data transfer types.

Interrupt transfers are relatively small transfers to and from a USB function. Interrupt transfer from a USB function to the host is performed somewhat indirectly, because USB host 12 is the bus master and as such may not be interrupted. Instead, USB host 12 periodically polls each function and, in response to a notification that interrupt data has been posted at an interrupt endpoint, retrieves the interrupt information from that endpoint. Interrupt data typically consists of event notification, input keyboard characters, or input coordinates organized as one or more bytes. For example, interrupt data may be presented by keyboard 18 or mouse 24 (or some other pointing device) to convey user inputs.

Isochronous data is continuous and real-time in creation, communication, and use. According to the USB Specification, isochronous transfers are unidirectional. Bidirectional isochronous transfers therefore require both an IN isochronous endpoint and an OUT isochronous endpoint, or alternatively two pipes associated with the same endpoint. The time base of the data stream is implied by the rate at which the data is delivered, hence the term "isochronous". Accordingly, isochronous data transfers are particularly useful for transferring time data that are sensitive to delivery delays. For isochronous pipes, the bandwidth requirements are typically based upon the sampling characteristics of the associated function, and the maximum tolerable latency is related to the buffering available at each endpoint. A conventional example of isochronous data transfer is the transfer of received real-time video information from a USB modem 14 to host 12. Due to its real-time nature, the delivery rate of isochronous data must be maintained to avoid drop-outs in the data stream, and therefore isochronous communications cannot be corrected by hardware retries. Because of this, isochronous data communication may be lossy, while timely delivered. In practice, the bit error rate of USB is predicted to be sufficiently small that applications using isochronous data are not appreciably affected in a negative manner by such losses.

According to the preferred embodiment of the invention, as will be described below, certain Quality of Service (QoS) categories utilize isochronous endpoints. This permits the allocation of a dedicated portion of USB bandwidth to these isochronous transfers, which in turn ensures that the data can be delivered at the specified rate.

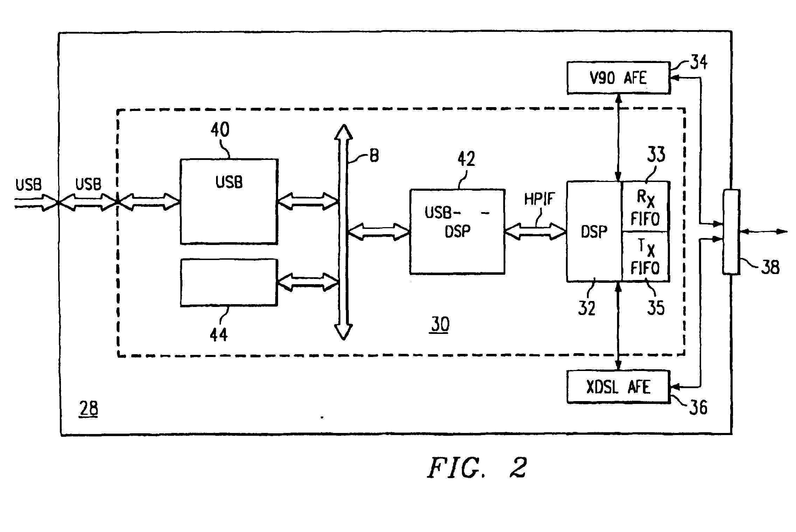

Figure 2 illustrates a block diagram of a function card 28 according to the preferred embodiment of the invention. In the general sense, function card 28 represents a circuit board; more specifically, function card 28 of Figure 2 includes, in this example, functional blocks corresponding to the implementation of function card 28 as modem 14 of Figures 1a and 1b. In this example, therefore, function card 28 is intended to be enclosed within an external housing for modem 14, electrically connected to the USB bus in the conventional manner. In this example of the preferred embodiment of the invention, modem 14 is a hybrid modem serving both voice-band (e.g., V.90) and DSL communications.

For the example of function card 28, USB bus in Figure 2 corresponds to the two data conductors of a USB cable, such as the data conductors of cable C₃ shown in Figure lb. The USB bus is coupled to a USB interface 30 which, as detailed below, includes various other functional blocks that are formed using one or more integrated circuits. According to this embodiment of the invention, USB interface 30 is an integrated function that includes digital signal processor ("DSP") function 32. By way of example, DSP 32 may be correspond to any one of various types of DSPs commercially available from Texas Instruments Incorporated, such as the TMS320C6201, TMS320C6202, or TMS320C6205.

DSP 32 in USB interface 30 is further connected to two different analog front end ("AFE") circuits, namely, a V.90 (i.e., voice-band) AFE 34 and an xDSL AFE 36. Each AFE 34 and 36 is connected to a physical connector 38 for connecting to the communications facility (not shown) over which modem communications are carried out.

According to the preferred embodiment of the invention, in which function card 28 corresponds to a hybrid modem, DSP 32 includes some amount of on-chip memory useful for the storage of communication data that has been received or that is about to be transmitted. In particular, as shown in Figure 2, a portion of this on-chip memory of DSP 32 corresponds to receive FIFO 33, which is a first-in-first-out buffer within which data received from AFE 34 or 36, as the case may be, are stored prior to forwarding to host 12. In the case of Asynchronous Transfer Mode (ATM) communications, receive FIFO 33 stores incoming ATM cells. Conversely, another portion of the on-chip memory of DSP 32 corresponds to transmit FIFO 35, within which data (e.g. ATM cells) are buffered after receipt from host 12, prior to transmission via the appropriate one of AFEs 34, 36.

On the host side of USB interface 30, the USB bus connects to a USB interface module 40, which in turn is connected to internal bus B. Also connected to bus B is a USB-to-DSP controller 42, which is further connected to DSP 32 by way of bus HPIF. USB interface 30 also includes shared memory 44, which is accessible by both USB interface module 40 and USB-to-DSP controller 42 via bus B, and which includes addressable locations reserved for use as USB endpoints.

As noted above, bus HPIF connects USB-to-DSP controller 42 to DSP 32, which in this example is implemented within integrated USB interface 30. Alternatively, DSP 32 may be implemented as a separate integrated circuit from the integrated circuit containing USB-to-DSP controller 42. In this external DSP case, bus HPIF may be arranged in various ways. For example, in the case of DSP devices such as the TMS320C6201 that have an external host port interface ("HPIF"), bus HPIF corresponds to a sixteen bit host port interface bus. On the other hand, DSP devices such as the TMS320C6202 have an Xbus (extended bus) interface that supports various operational modes, one of which is a thirty-two bit host port interface mode. Accordingly, where DSP 32 is implemented by way of a separate integrated circuit device having an Xbus interface, bus HPIF corresponds to an Xbus bus operating in the host port interface mode. It is contemplated that those skilled in the art having reference to this specification will be readily able to implement the appropriate interface.

In operation, in the general sense, function card 28 interfaces at both the physical and protocol levels with the USB system to carry out communication with USB host 12, and to process the data (either after receipt from host 12 or prior to forwarding to host 12), according to the peripheral function implemented. In this example, where function card 28 corresponds to modem 14, DSP 32 is programmed and configured to provide the functionality of the USB function, which in this example is a modem. As described above, in this specific example of hybrid modem 14, DSP 32 is programmed to support both voice and xDSL communications via AFEs 34 and 36, respectively.

In the host-to-function direction, data is transmitted by host 12 over the USB bus to function card 28. This data is received by USB interface module 40 and then, in the general sense, processed according to USB principles. In this example, USB interface module 40 writes data received according to one of the four above-described USB transfer types to endpoints in shared memory 44, via bus B. Once the data is written to endpoints in shared memory 44, USB-to-DSP controller 42 may access these endpoints, via bus B, for additional processing by DSP 32. In this manner, data written to the endpoints by host 12 through USB interface module 40 may be read by DSP 32 via bus HPIF.

In the function-to-host direction, data is received by DSP 32 from the communications facility, and processed as required for the modem functionality. DSP 32 then applies the processing results to bus HPIF, and these results are transferred by USB-to-DSP controller 42 to the appropriate endpoints in shared memory 44. Host 12 then accesses shared memory 44 to retrieve this data over the USB bus.

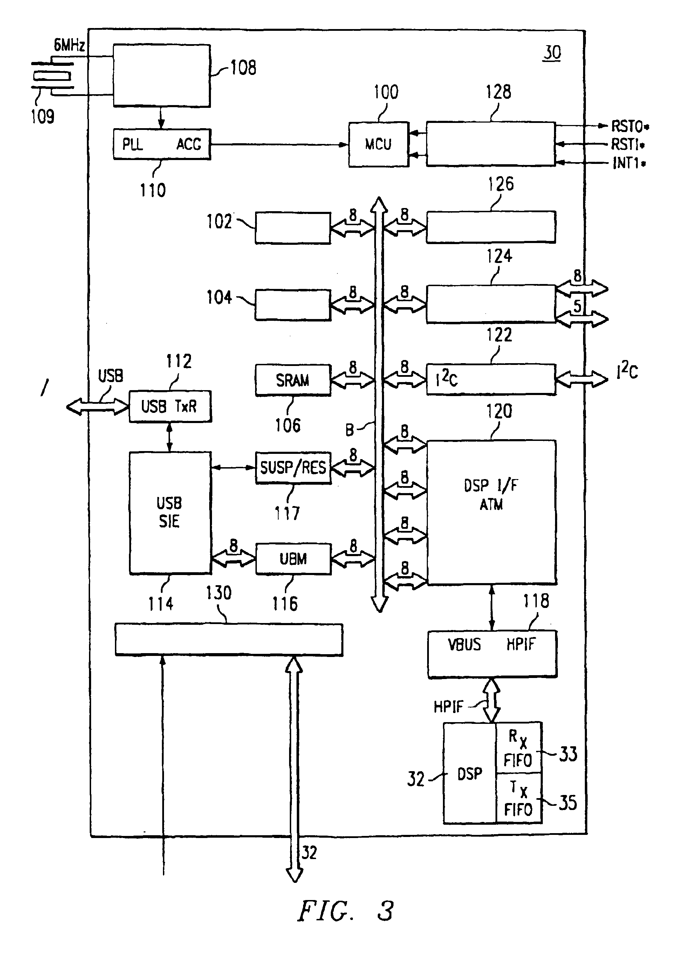

Referring now to Figure 3, an exemplary architecture of USB interface 30 in modem 14 of Figure 2, according to the preferred embodiment of the invention, will now be described. Of course, USB interface 30 may be constructed according to any one of a number of architectures and arrangements. As such, it is to be understood that the exemplary architecture illustrated in Figure 3 and described herein is presented by way of example only.

The architecture of USB interface 30, as shown in Figure 3, includes functions similar to those provided by the TUSB3200 USB peripheral interface devices available from Texas Instruments Incorporated. In this regard, USB interface 30 includes microcontroller unit (MCU) 100, which may be a standard 8052 microcontroller core. MCU 100 is in communication with various memory resources over bus B, including program read-only memory (ROM) 102, and random access memory (RAM) banks 104, 106. RAM bank 104 primarily provides code space that may be loaded from USB host 12 over the USB bus, or alternatively from another device over another one of the ports provided in USB interface 30. As will be described in further detail below, USB endpoint buffers reside within synchronous RAM bank 106; in this sense, RAM 106 serves as shared memory 44 of Figure 2. MCU 100, as well as the other synchronous functions of USB interface 30, are clocked at the appropriate clock rates by clock signals generated by phase-locked loop (PLL) and adaptive clock generator (ACG) 110. PLL and ACG 110 divides frequencies down from that of a reference clock generated by oscillator 108, which in turn is based upon a frequency set by external crystal 109. The available clock signals so generated are suitable for supporting the available USB synchronization modes, including asynchronous, synchronous, and adaptive modes for isochronous endpoints.

For USB communications with USB host 12, USB interface 30 includes USB transceiver 112, which preferably supports full speed (12 Mb/sec) data transfers, and includes a differential input receiver, a differential output driver, and two single ended input buffers. USB transceiver 112 is coupled to USB serial interface engine (SIE) 114, which manages the USB packet protocol requirements for data transmitted and received by USB interface 30 over the USB bus. In general, SIE 114 decodes packets received over the USB bus to validate and identify the packet identifier (PID), and generates the correct PID for packets to be transmitted over the USB bus. Other receive functions performed by SIE 114 include cyclic redundancy check (CRC) verification and serial-to-parallel conversion; for data transmission, SIE 114 generates the CRC value and also effects parallel-to-serial conversion. SIE 114 bidirectionally communicates with USB buffer manager (UBM) 116, which controls reads and writes of data from and to the appropriate USB endpoint buffers in RAM 104, 106. In this regard, UBM 116 decodes the USB function address in received packets to determine whether the packet is in fact addressed to USB interface 30 itself, as well as decoding the endpoint address contained in the received packet (which may include a polling packet from USB host 12). Suspend and resume logic 117 is also provided for detecting suspend and resume conditions on the USB bus, and for controlling SIE 114 accordingly.

Other various functions are also provided within USB interface 30. Inter-IC (I²C) controller 122 is coupled to bus B, and supports communications to and from other integrated circuits over a two-wire serial connection. An example of an I²C communication is the loading of code RAM 104 from an external integrated circuit over the I²C port, under the control of I2C controller 122. General purpose port logic 124 interfaces bus B to general purpose parallel input/output ports, numbering two in this example. Timers 126 are provided to control the operation of USB interface 30. Reset and interrupt logic 128 monitors various interrupt and reset conditions, to provide interrupt and reset control for MCU 100. Additionally, extra internal memory is provided by asynchronous RAM 130, which is externally accessible, for example to DSP 32 by way of a dedicated RAM interface. This dedicated interface allows RAM 130 to be read from and written to independently from and asynchronously with the USB functionality of USB interface 30.

In addition to the USB interface functions described above, which are substantially common with the TUSB3200 USB peripheral interface devices available from Texas Instruments Incorporated and which effectively correspond to USB interface module 40 of Figure 2, USB interface 30 according to the preferred embodiment of the invention includes DSP interface and ATM acceleration logic 120, VBUS-to-HPIF bridge 118 and, in this example, DSP 32, all integrated into the same integrated circuit device. As noted above, USB interface 30 may alternatively be implemented by multiple integrated circuit devices.

DSP interface and ATM acceleration logic 120 processes data received from USB host 12 over the USB bus for application to DSP 32 by way of VBUS-to-HPIF bridge 118, and conversely processes data received from DSP 32 before transmission to USB host 12 over the USB bus. The construction and operation of DSP interface and ATM acceleration logic 120 will be described in further detail below. As noted above, VBUS-to-HPIF bridge 118 supports reads and writes to on-chip memory of DSP 32 in either a sixteen bit or thirty-two bit mode. Referring back to Figure 2, DSP interface and ATM acceleration logic 120, in cooperation with VBUS-to-HPIF bridge 118, implements the function of USB-to-DSP controller 42 within USB interface 30.

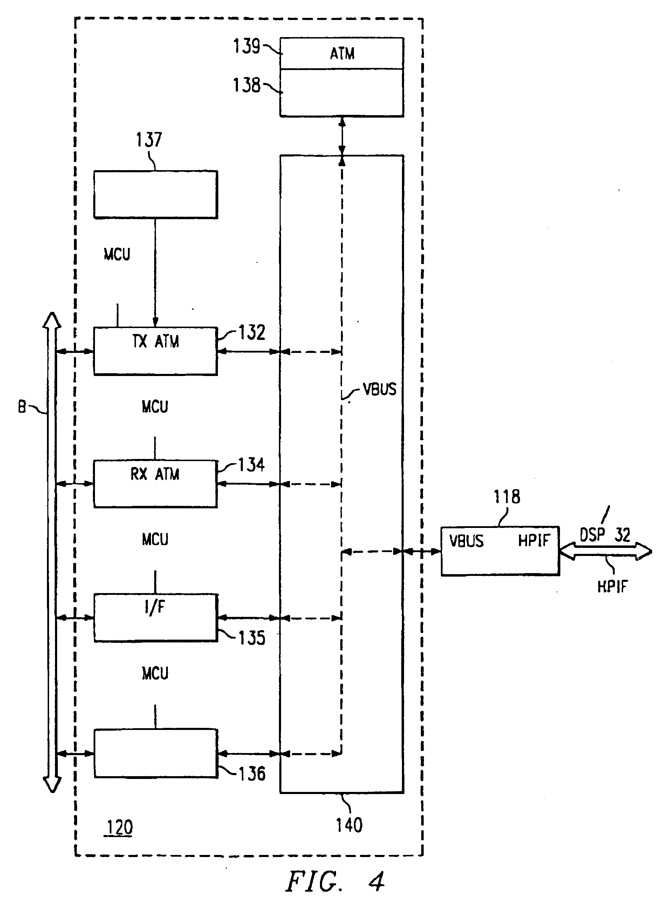

Referring now to Figure 4, the construction of DSP interface and ATM acceleration logic 120 according to the preferred embodiment of the present invention will now be described. As shown in Figure 4, multiple controllers within DSP interface and ATM acceleration logic 120 are coupled to bus B (Figure 3). According to this embodiment of the invention, in which USB interface 30 is implemented into modem 14, DSP interface and ATM acceleration logic 120 includes ATM transmit controller 132 and ATM receive controller 134. Each of these controllers 132, 134 is coupled between bus B and controller 140, and is utilized to carry out ATM segmentation and reassembly, respectively. The construction and operation of ATM transmit controller 132 according to the present invention will be described in further detail below. The construction and operation of ATM receive controller 134 is described in detail in copending application S.N. 09/507,249, filed February 18, 2000, commonly assigned herewith and incorporated herein by this reference.

In addition, host interface controller 135 is bidirectionally coupled between bus B and controller 140, while code overlay controller 136 unidirectionally communicates data (corresponding to program instructions for DSP 32) from bus B to controller 140. According to the preferred embodiment of the invention, each of controllers 132, 134, 135, 136 includes an interface to MCU 100 (Figure 3), by way of which controllers 132, 134, 135, 136 are configured to point to corresponding assigned USB endpoint buffers in shared memory 44 (e.g., in RAM 106 of the implementation of Figure 3).

Controller 140 arbitrates access by controllers 132, 134, 135, 136 to bus VBus (which appears as a "virtual" bus to devices external to USB interface 30), and further permits access to VBUS-to-HPIF bridge 118 and internal registers 138, as slaves on bus VBus. Specifically, in response to one of controllers 132, 134, 135, 136 issuing a request to master bus VBus, controller 140 operates to grant access to bus VBus according to an arbitration scheme. The bank of internal registers 138 also communicates with controller 140 as a slave on bus VBus, and stores configuration information for DSP interface and ATM acceleration logic 120 and its functional modules. Endpoint buffer information is preferably configured internally to each of controllers 132, 134, 135, 136. This configuration information may also include other configuration and status information appropriate for the operation of DSP interface and ATM acceleration logic 120. For example, ATM configuration register 139 includes a writeable state that indicates whether modem 14 is to operate in the DSL voice-band mode.

VBUS-to-HPIF bridge 118 effectively operates as a bridge between the bus connected to DSP 32 and internal bus VBus which, as noted above, is accessible to controllers 132, 134, 135, 136. For example, where USB interface 30 is interfaced with the host-port interface (HPIF) of DSP 32, as in the case of the TMS320C6201 digital signal processor (DSP) available from Texas Instruments Incorporated, VBUS-to-HPIF bridge 118 operates effectively as a bridge to that interface, formatting and translating the communicated data signals from those on bus VBus into a format appropriate for the bus protocol of the host-port interface.

According to the preferred embodiment of the invention, DSP interface and ATM acceleration logic 120 also includes priority scheduler 137. Priority scheduler 137 is logic for controlling transmit controller 132, particularly in its selection of endpoints in shared memory 44 for retrieval of data to be segmented and transmitted over the communications facility. The particular construction of priority scheduler 137 may depend upon the complexity and nature of transmissions that are to be handled by USB interface 30, which may be either connection-less transmissions, such as IP communication protocols, or ATM or other connection-oriented communications. If the scheduling task is relatively simple, priority scheduler 137 may be implemented as sequential logic, configurable by way of a control register. If the scheduling function is somewhat complex, such as may be encountered in scheduling communications among various QoS categories, priority scheduler 137 may be implemented as programmable logic, configurable by way of a firmware download from host 12 in the initialization of modem 14.

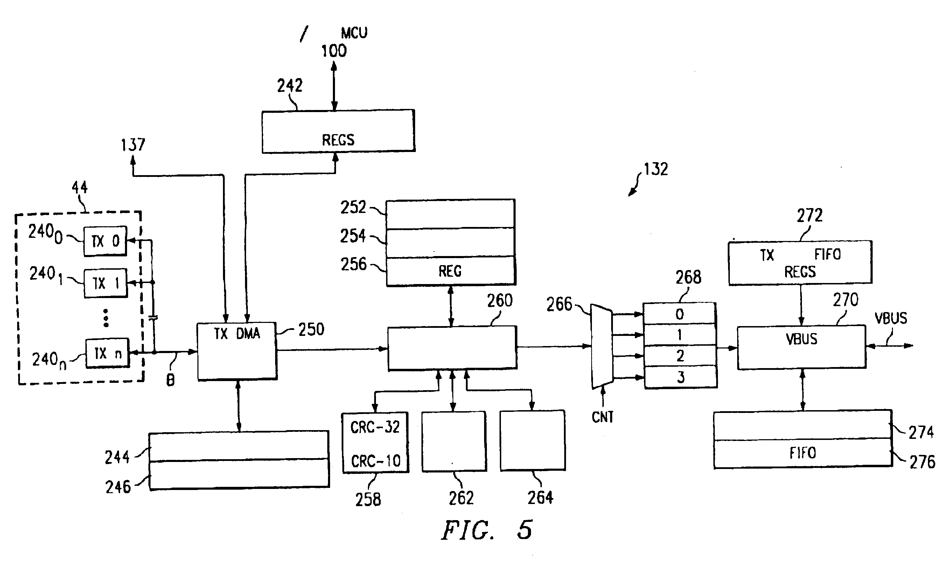

Referring now to Figure 5, the construction of ATM transmit controller 132 according to the preferred embodiment of the invention will now be described. As shown in Figure 5, the operational logic of ATM transmit controller 132 is primarily realized by way of state machines, namely transmit state machine 250, segmentation state machine 260, and VBus state machine 270, each of which is preferably implemented by sequential logic. It is contemplated that those skilled in the art, having reference to this specification, will be readily able to implement state machines 250, 260, 270 to perform the functions described herein, and in a manner suitable for particular realizations.

Transmit state machine 250 is coupled to bus B in USB interface device 30, for controlling communication with transmit endpoints 240 in shared memory 44 (which, in the exemplary realization of Figure 3, resides in RAM 106). According to this embodiment of the invention, multiple transmit endpoints 240 are provided in shared memory 44, with each endpoint corresponding to a QoS category. According to the preferred embodiment of the present invention, those endpoints 240 that correspond to a QoS category for which bandwidth is not guaranteed are preferably bulk USB endpoint. As is known in the art, bulk USB endpoints are implemented by one or more sixty-four byte buffers in a conventional FIFO manner (e.g., a pair of "Ping-Pong" buffers or an elastic FIFO arrangement).

On the other hand, higher priority, guaranteed-bandwidth transfers are communicated to and from endpoints 240 that are of the isochronous type. Shared memory 44 may implement isochronous endpoints 240 by way of paired buffers or using an elastic buffer arrangement. In any case, the buffers must be sufficiently large that the scheduler may support the guaranteed bit rate for a given service period. By way of definition, a service period is a period of time within which a specified amount of isochronous data is expected. For example, a service period for audio data may be on the order of 20 msec, within which twenty packets of data are to be transmitted or received, as the case may be. This requirement of a fixed amount of data within a fixed period of time implies the data transfer rate of the isochronous transfer, and also implies the size of the paired buffers for the corresponding isochronous endpoints 240. For the example of audio data transfer to USB speakers 20 (Figures 1a and 1b) operating at a 44.1 kHz sample rate with four-byte samples, the paired buffers at endpoint 240 may be relatively large (exceeding 3 Kbytes).

According to the preferred embodiment of the invention, endpoints 240 may be assigned to either bulk and isochronous transfer types, depending upon the priority and class of service associated with particular communications. The assignment and access of these endpoints 240 in performing the network communication functions of modem 14, according to the preferred embodiment of the invention, will be described in further detail below.

The reading of endpoints 240 for eventual transmission over the communications facility by modem 14 is handled by transmit state machine 250. Transmit state machine 250 accesses shared memory 44 at addresses based upon the contents of endpoint configuration register 242, which is written by MCU 100 with the base addresses of endpoints 240 in shared memory 44. For a given endpoint 240 in shared memory 44, current buffer pointer 244 indicates the FIFO buffer from which data is currently being retrieved, and buffer byte counter 246 indicates the current byte position within that FIFO buffer. Buffer byte counter 246 is also used in handshaking operations with USB buffer management circuitry 116 (Figure 3).

According to the preferred embodiment of the invention, priority scheduler 137 selects the particular endpoint 240 in shared memory 44 that is to be accessed by transmit state machine 250 in the receipt and processing of communication data. The selection of endpoints 240 is effected by priority scheduler 137 according to the QoS categories that are established upon configuration, and according to the associated priority scheme. According to the present invention, these priority schemes may be implemented in various alternatives, in both connection-oriented and connection-less schemes. Examples of each of these types of QoS priority schemes will now be described.

### Connection-less priority-based transmissions

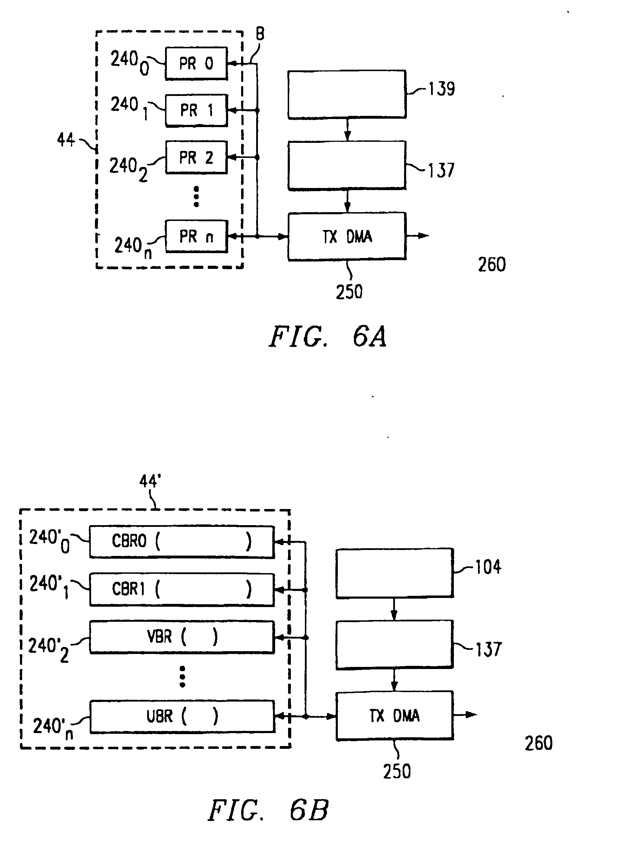

Figure 6a illustrates the arrangement of endpoints 240 of shared memory 44, in combination with transmit state machine 250 and priority scheduler 137, according to a first preferred embodiment of the present invention. In this embodiment of the invention, the communications forwarded by USB interface 30 are of the connection-less type. As known in the art, IP protocols operate in a connection-less manner, and as such do not follow the ATM QoS categories. However, it is useful, in some applications, to carry out connection-less communications according to a priority scheme, where certain transmissions are awarded higher priorities than others. For example, long file downloads by way of an FTP file transfer may be assigned a relatively low priority, while higher priorities may be awarded to short, bursty, message communications.

As shown in Figure 6a, endpoints 240 in shared memory 44 are assigned different levels of priority. In this example, endpoint 240₀ has the highest priority (priority level 0), endpoint 240₁ has the next priority level (priority level 1), and so on. These priority levels are used by priority scheduler 137 to control transmit state machine 250, specifically in controlling transmit state machine 250 to apply, to bus B, memory addresses corresponding to the one of endpoints 240 that is to be read according to the current priority scheme. Priority scheduler 137 in this example is implemented as sequential logic, configurable according to configuration information written to control register 139 by MCU 100. Alternatively, this configuration information may be written to control register 139 by host 12 executing a control transfer to a control endpoint in shared memory 44, for example upon initial configuration of modem 14 when connected to the USB bus.

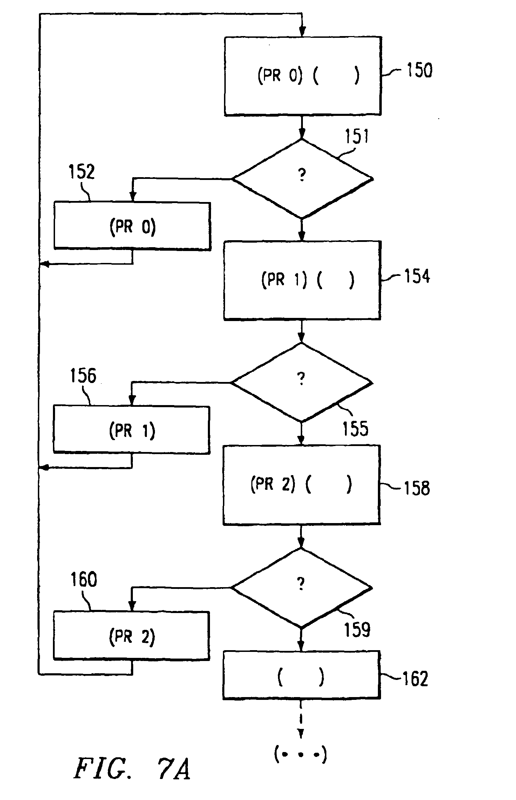

In operation, transmit state machine 250 and priority scheduler 137 can carry out the traffic shaping of connection-less transmissions according to any one of a number of priority schemes, depending upon the particular application. Figure 7a illustrates an example of a relatively simple priority scheme, in which all of endpoints 140 are configured as bulk endpoints, but each have a different priority level assigned. As known in the art, there are no time or data rate constraints inherent to USB bulk transfers. Accordingly, the priority scheme of Figure 7a is well-suited for connection-less communications of non-real-time data. Examples of such communications include file downloads and email communications, using well-known IP protocols.

The priority scheme of Figure 7a is managed by priority scheduler 137, which directs transmit state machine 250 to perform the indicated access. Data transmission within a USB frame begins with process 150 in which priority scheduler 137 selects endpoint 240₀, which is associated with the highest priority transmission, and controls transmit state machine 250 to poll the status of this endpoint 240₀. As a result of polling process 150, transmit state machine 250 performs decision 151 to determine whether endpoint 240₀ contains data that have not yet been retrieved; such data will have been recently written to endpoint 240₀ by host 12 by way of a bulk transfer. If so (decision 151 is YES), transmit state machine 250 reads a USB packet from endpoint 240₀ in process 152, using the memory address in endpoint configuration registers 242 in combination with the current contents of current buffer pointer 244 and buffer byte counter 246 (Figure 5). Control then returns back to polling process 150, in which highest priority endpoint 240₀ is again interrogated, and the process repeated.

According to this priority scheme, access continues to this highest priority endpoint 240₀ so long as it contains any unread data, including any new data that is being written thereinto during the reading process of Figure 7a. Upon the polling process 150 determining that there are no unread data in endpoint 240₀ (decision 151 is NO), priority scheduler 137 and transmit state machine 250 then polls the next highest priority endpoint 240₁, in process 154. Decision 155 then determines whether unread data are present in this endpoint 240₁. If so (decision 155 is YES), transmit state machine 250 executes process 156 to read a data packet from endpoint 240₁.

According to this embodiment of the invention, upon the reading of any endpoint 240 (e.g., in processes 152, 156), control returns to process 150 in which the highest priority endpoint 240₀ is polled and interrogated to determine whether new data has been written to it. In this manner, the lower priority endpoints 2401 through 240ₙ are polled and read only if no higher priority endpoint 240₀ through 240ₙ₋₁, as the case may be, contains unread data. Alternatively, if desired, priority scheduler 137 may retain control within a lower priority endpoint 240₁ through 240ₙ so long as it contains unread data, without returning to poll higher priority endpoints 240₀ through 240ₙ₋₁ until a particular time interval (e.g., USB frame, or some shorter service interval) has elapsed. Other alternative priority schemes will also be apparent to those skilled in the art having reference to this specification.

Returning back to the example of Figure 7a, upon transmit state machine 250 determining that no unread data are present in endpoint 240₁ (decision 155 is NO), control passes in turn to process 158 in which the next priority endpoint 240₂ is polled, and its status interrogated in decision 159. As in the higher priority cases, if unread data are present in this next endpoint 240₂ (decision 159 is YES), a packet is read by transmit state machine 250 in process 160, and control returns to process 150; if unread data are not present (decision 159 is NO), the next priority endpoint 240₃ is polled in process 162, with similar interrogation and reading actions taking place. This process is then carried out in this fashion for all endpoints 240 that are configured to receive connection-less network transmissions.

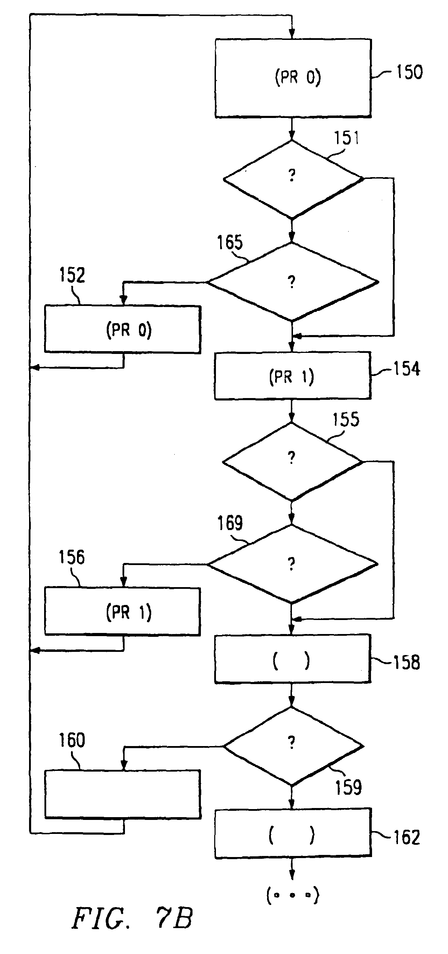

The example of a strict priority scheme as described relative to Figure 7a is implemented by way of bulk endpoints 240. Accordingly, none of the communications receives a guaranteed data rate (other than the highest priority communication which, in this example, receives as much bandwidth as it wants). Referring now to Figure 7b, an example of an alternative priority scheme for connection-less communications, in which some of the communications are delay-sensitive and handled through isochronous endpoints 240 in shared memory 44, will now be described in detail. The same reference numerals are used in Figure 7b, for the same processes as in the example of Figure 7a.

In this example, higher priority endpoints 240₀ and 240₁ are isochronous endpoints, and as such correspond to data transfers that are to be carried out at a fixed data rate over a given period of time, such as specified service intervals within a USB frame. The lower priority endpoints 240₂ through 240ₙ are bulk endpoints, and have no such time constraints. During configuration, host 12 and modem 14 must ensure that sufficient bandwidth is available to validly support the data rates indicated by isochronous endpoints 240₀ and 240₁.

The priority scheme of Figure 7b, similarly as in the strict priority scheme of Figure 7a, begins with process 150, in which the highest priority endpoint 240₀ is polled by transmit state machine 250. The initiation of this method at process 150 begins at the start of a time period over which the data transfer rate is to be measured. Examples of such a time period include a USB frame, and a service interval within a USB frame. As before, decision 151 determines whether unread data is present at endpoint 240₀. If so (decision 151 is YES), and because endpoint 240₀ is an isochronous endpoint, priority scheduler 137 performs decision 165 to determine whether the data rate for endpoint 240₀ has been satisfied for the current time interval. If not (decision 165 is NO), additional data remains to be read from endpoint 240₀ within the current time interval, and thus transmit state machine 250 reads a packet from endpoint 240₀ in process 152. Control then returns to polling process 150, for the next interrogation of endpoint 240₀.

Upon either no unread data being present at endpoint 240₀ (decision 151), or upon the data rate being satisfied for endpoint 240₀ for the current time interval (decision 165 is YES), transmit state machine 250 then polls the next priority endpoint 240₁, in process 154, and executes decision 155 to determine whether unread data are present. Again, because endpoint 240₁ is an isochronous endpoint in this embodiment of the invention, if unread data are present therein (decision 155 is YES), priority scheduler 137 determines whether the data rate has been satisfied for the current time interval, in decision 169. If not (decision 169 is NO), transmit state machine 250 reads a packet from endpoint 240₁ in process 156, and control returns to polling process 150 (directed to highest priority endpoint 240₀). If, however, the data rate for the current time interval has been satisfied (decision 169 is YES), transmit state machine 250 polls the next endpoint in the priority scheme in process 158, despite unread data being present at endpoint 240₁.

The time intervals over which the determination of the data rate completion is measured, in decisions 165 and 169 for endpoints 240₀ and 240₁, respectively, need not coincide with one another. Indeed, it is contemplated that the isochronous endpoints may be used for transmissions of different types and even protocols, and as such the data rate demand of the communications will likely differ.

Referring again to Figure 7b, upon either next priority endpoint 240₁ not having unread data (decision 155 is NO) or having its data rate satisfied (decision 169 is YES), the next priority endpoint 240₂ is polled in process 158. In this example, endpoint 240₂ and the remaining lower priority endpoints 240₃ through 240ₙ are bulk endpoints, for use with delay-tolerant traffic. Polling process 158, decision 159, and read process 160, are then executed by transmit state machine 250 in the manner described above, with polling process 162 and similar processing performed for still lower priority endpoints 240 as appropriate.

As discussed above, it is contemplated that other priority schemes besides those described herein relative to Figures 7a and 7b may alternatively be implemented. Examples of such other priority schemes include first-in first-out (FIFO) queuing, weighted queuing, and round-robin schemes. It is contemplated that those skilled in the art having reference to this specification will be readily able to implement such priority operation.

In any event, the data packets read from endpoints 240 by transmit state machine 250 are forwarded to DSP 32 in this example, via segmentation state machine 260 and VBUS state machine 270. The processing performed by these functions of transmit controller 132 will depend upon the particular communication protocol, and also upon the extent to which segmentation and similar processing is to take place within transmit controller 132. An example of the operation of segmentation state machine 260 and VBUS state machine 270 in the segmentation and transmission of ATM packets will be described in detail below. It is contemplated that those skilled in the art having reference to this specification will be readily able to implement such other simpler processing within transmit controller 132.

According to this first preferred embodiment of the invention, as shown by each of these priority scheme examples, the present invention enables the implementation of traffic shaping by way of scheduling the order in which the endpoints within the shared memory of the USB function are accessed. Communications of varying priority may be established in this manner, with guaranteed data rate capability provided by the use of isochronous data transfers. According to the present invention, the host computer need not manage the scheduling and prioritization of the transmission of data, but rather the USB function itself handles these tasks. Processing efficiencies in the USB host, and also in the utilization of the USB bus, are thus provided.

### Asynchronous Transfer Mode (ATM) communications

Transmit controller 132, according to a second preferred embodiment of the invention, is also able to implement quality of service (QoS) management for connection-based communications, such as those under Asynchronous Transfer Mode (ATM) protocol. As noted above and is well known in the art, ATM traffic management routines assign bandwidth according to various categories of service. These categories are established upon connection by way of a "traffic contract". The traffic contract for a given ATM Virtual Path (VP) or Virtual Connection (VC) specifies the QoS parameters for that connection. These parameters include such values as Peak Cell Rate (PCR), Cell Transfer Delay (CTD), Cell Delay Variation (CDV), Sustainable Cell Rate (SCR), Maximum Burst Size (MBS), and the like. Not all parameters are relevant to each QoS category.

The highest priority category of ATM service is Constant Bit Rate (CBR). communications, in which the transmission is carried out at a "guaranteed" constant data rate. This guaranteed data rate corresponds to a fixed, or static, amount of bandwidth that is to be dedicated for this CBR connection. CBR connections are thus analogous to a leased line. The allocated bandwidth for the CBR channel is characterized by the value of the Peak Cell Rate (PCR) parameter. The source of the CBR communication may emit cells at or below this PCR value, for any duration; the CBR connection guarantees that sufficient bandwidth will be present for these transmitted cells. Accordingly, CBR communications are suited for services that require rigorous timing control and performance parameters, such as voice, video, and Circuit Emulation Services (CES).

The Variable Bit Rate (VBR) category is also used for time-sensitive applications. VBR communications differ from CBR in that the cell transmission rate is expected to vary over time, and as such the bandwidth allocated to the VBR communications may also vary over time. The network maintains time-sensitivity of VBR communications by ensuring that the communications are maintained within certain limits on Peak Cell Rate (PCR), Sustainable Cell Rate (SCR), and Maximum Burst Size (MBS). VBR service includes two sub-categories, namely Real-Time VBR (rt-VBR) and Non-Real-Time VBR (nrt-VBR). These categories differ from one another in that nrt-VBR has a relatively loose constraint on cell delay, and on the variation of cell delay, and is thus more bursty than rt-VBR. Voice-over-ATM and some multimedia communications are typical applications for rt-VBR, while nrt-VBR is appropriate for interactive transaction processing, and for frame relay internetworking.

The Available Bit Rate (ABR) service category is useful for transmission sources that can vary their data rate according to network conditions. In this manner, ABR traffic can increase their data rate as bandwidth becomes available, but reduce the data rate if required by the network. Certain transmission parameters are specified in the traffic contract, however, so that each ABR connection operates within a range of acceptable values, between a Peak Cell Rate (PCR) and a Minimum Cell Rate (MCR). Numerous conventional flow control algorithms for fairly allocating bandwidth among ABR connections are known in the art. The flexibility tolerated by ABR connections allows this service category to be quite economical. Examples of applications that are well-suited for ABR service include many LAN internetworking services; critical data transfer, such as banking services; supercomputer applications; and data communications applications, such as remote procedure calls, distributed file services, and computer process swapping and paging.

The lowest priority service category is Unspecified Bit Rate (UBR), in which the network carries data in a "best effort" manner, depending upon network conditions. There is no guaranteed traffic rate for UBR communications, and therefore no commitment is made for cell transfer delay or cell loss ratio. Remote terminal communications, text transfer, messaging services, and file retrieval applications can utilize this least expensive service category.

Referring now to Figure 6b, the arrangement of endpoints 240' in shared memory 44, in connection with transmit state machine 250 and priority scheduler 137, according to a second preferred embodiment of the invention will now be described. This second preferred embodiment of the invention exemplifies the implementation of multiple ATM QoS categories into the selection and access of endpoints 240'. In this example, endpoint 240'₀ is an isochronous endpoint associated with a first CBR virtual connection. Endpoint 240'₁'is an isochronous endpoint associated with a second CBR virtual connection, which according to this example is a lower data rate connection. Bulk endpoint 240'₂ is associated with a VBR virtual connection. Other bulk endpoints 240' may be associated with other lower priority connections, up to bulk endpoint 240'ₙ which, in this example, is associated with a UBR virtual connection.

The scheduling of transmissions through modem 14 according to these multiple QoS service categories, while well-known in the art, will tend to vary over time, as connections are established and removed. Furthermore, the number of parameters and constraints per connection, according to which transmissions are scheduled, complicate the prioritization of communications as compared to the priority schemes described above relative to Figures 6a, 7a, and 7b. According to this second preferred embodiment of the invention, therefore, priority scheduler 137 is preferably implemented as programmable logic. The parameters and operation of priority scheduler 137 are established by program instructions and parameters stored in program memory 104, preferably configurable by way of a firmware download from host 12 in the initialization and operation of modem 14.

For clarity, no ABR communications are established by transmit controller 132 in this example. It is contemplated, however, that the application of the preferred embodiment of the invention to ABR communications will be readily apparent to those skilled in the art having reference to this specification. In this regard, it is contemplated that such ABR communications will also benefit from the present invention, considering the use of QoS categories according to this class of service.

According to this second embodiment of the present invention, the selection of the appropriate endpoint 240' is a substantially separate process from the segmentation of ATM cells from the transmitted USB packets. More specifically, priority scheduler 137 operates in conjunction with transmit state machine 250 to select the one of endpoints 240' according to the configured QoS categories to be communicated, while segmentation state machine 260 operates in combination with transmit state machine 250 to retrieve the communicated data from the selected endpoint 240' and format the read data into ATM cells for transmission over the communications facility.

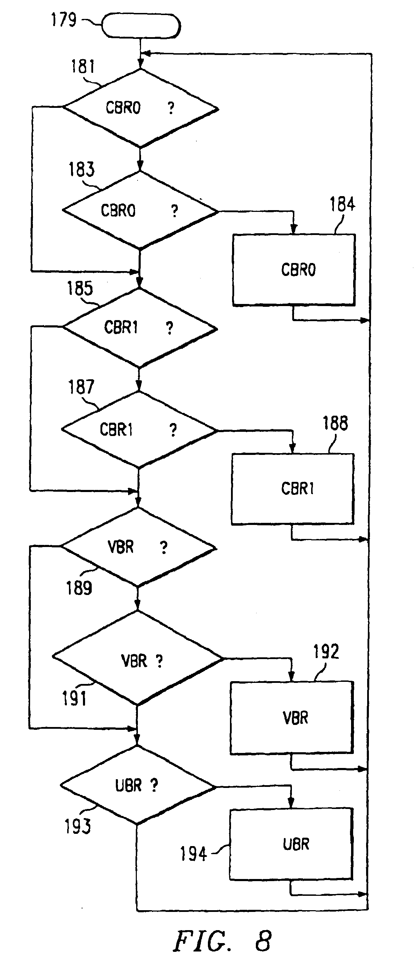

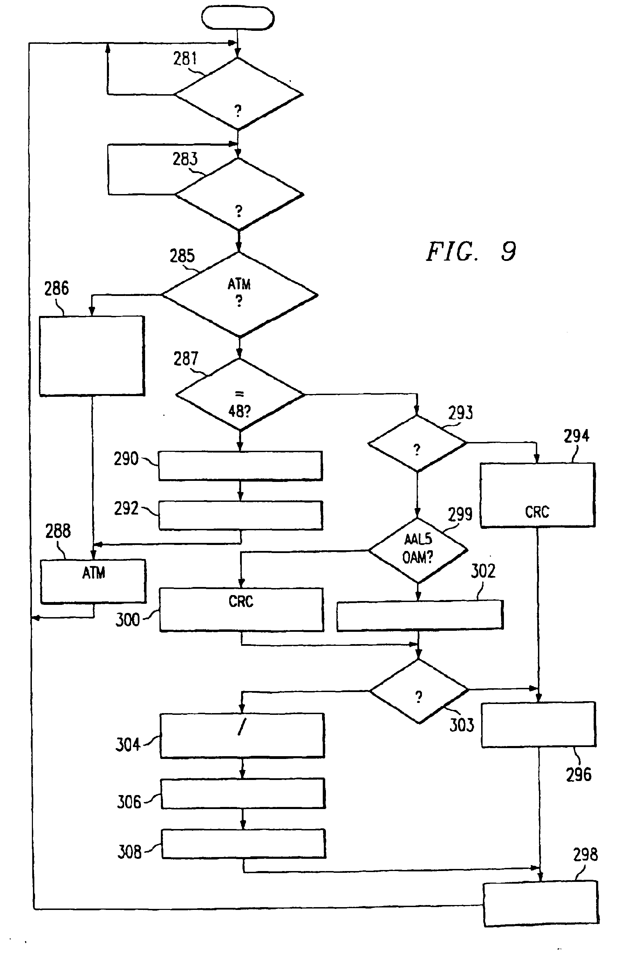

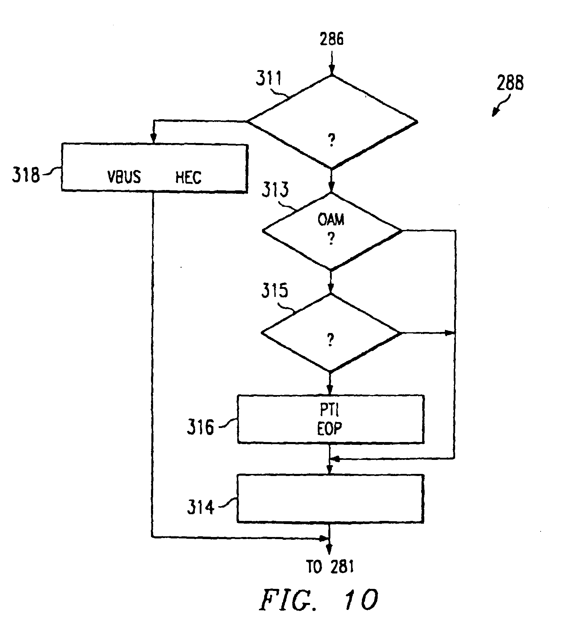

The following description will separately describe the method used to select the appropriate endpoint 240' from the segmentation operation. Figure 8 illustrates the method of scheduling and selecting of the appropriate endpoint 240, while Figures 9 and 10 illustrate the segmentation operation.

Referring first to Figure 8, the operation of transmit controller 132 in scheduling ATM communications for multiple QoS categories, according to this preferred embodiment of the invention, will now be described in detail. In this embodiment of the invention, endpoints 240' are polled and accessed according to a priority scheme that involves the ATM QoS data transmission parameters.

In advance of the operations illustrated in Figure 8, the QoS parameters for the current virtual connections are communicated to priority scheduler 137, by way of write operations carried out to program memory 104 or to configuration registers 272 within transmit controller 132. Upon the establishing or dropping of a new connection, these parameters will be updated or modified. Additionally, resource management (RM) ATM cells received from the network over the communications facility communicate information concerning current network conditions, in response to which the QoS parameters may be adjusted. For example, with reference to Figure 5, the contents of configuration registers 272 in transmit controller 132 may be updated from the RM cells, with the new values used by priority scheduler 137 in its scheduling.

The particular scheduling algorithm that is followed by priority scheduler 137 may follow those used by conventional ATM traffic management devices. For example, the scheduling algorithm executed by priority scheduler 137 may correspond to that carried out by the TNETA1585 ATM Traffic Management Scheduler Device available from Texas Instruments Incorporated. The results of the particular ATM scheduling algorithm are then used to control transmit state machine 250 in accessing endpoints 240' in shared memory 44 to effect the scheduled transmission. The flow diagram of Figure 8 is an example of such control, as will now be described for the example of two CBR channels, one ABR channel, and one UBR channel, as illustrated in Figure 6b.

Upon the initiation of a USB frame or other time interval, the process of Figure 8 according to this second preferred embodiment of the invention begins with decision 181, in which priority scheduler 137 determines whether the guaranteed data rate for the first CBR channel (CBRO) associated with isochronous endpoint 240'₀ has yet been satisfied over the current time interval. Decision 181 is, as noted above, based upon the scheduling algorithm executed by priority scheduler 137, using the Peak Cell Rate (PCR) value for virtual connection CBRO corresponding to isochronous endpoint 240'₀. If the data rate has not yet been satisfied (decision 181 is NO), decision 183 is then performed by priority scheduler 137 causing transmit state machine 250 to poll isochronous endpoint 240'₀ in shared memory 44 to determine whether unread data is present at this isochronous endpoint 240'₀. Parenthetically, decision 183 subsumes the polling and decision processes that were separately described relative to Figure 7a. If decision 183 returns a YES, priority scheduler 137 selects endpoint 240'₀ in process 184, and waits for the fetching of an ATM cell from this location by transmit state machine 250 and segmentation state machine 260, in its operations described below relative to Figures 9 and 10. Following this access, control then passes back to decision 181 for further processing of virtual channel CBRO.

In the event that either the data rate for channel CBR0 has been satisfied (decision 181 is YES) or no unread data is present at endpoint 240'₀ (decision 183 is NO), priority scheduler 137 evaluates decision 185 to determine whether the data rate for the next priority virtual channel CBR1 has been met over the current time interval. If the data rate has not yet been met for channel CBR1 (decision 185 is NO), priority scheduler 137 and transmit state machine 250 then execute decision 187 to determine whether unread data is present at endpoint 240'₁, which is associated with channel CBR1. If so (decision 187 is YES), transmit state machine 250 performs process 188 to select endpoint 240'₁, and to await fetching of an ATM packet from that location. Upon completion of that access, control returns back to decision 181 to re-interrogate and process channel CBR0. On the other hand, if either channel CBR1 has its data rate satisfied for the current time interval (decision 185 is YES) or no unread data is present at endpoint 240'₁ (decision 187 is NO), control passes to decision 189 for processing of the remaining VBR and UBR channels, at bulk endpoints 240'₂ through 240'ₙ.

In this example where channel CBR0 is serviced before channel CBR1, channel CBR1 preferably has a lower data rate than that of channel CBR0, despite both channels corresponding to CBR transmissions. Alternatively, channels CBR0 and CBR1, and their corresponding isochronous endpoints 240'₀, 240'₁, could be processed in an interleaved fashion with the processing of channel CBR1 by decisions 185, 187 and process 188 occurring after each instance of the processing of channel CBR0, regardless of the result. In this alternative approach, processing of the bulk endpoints and VBR/UBR channels (and, if present, ABR channels) would begin only if, for both of channels CBR0, CBR1, the corresponding data rates were satisfied or no unread data are present at their corresponding isochronous endpoints 240'₀, 240'₁. It is contemplated that these, and other, alternative arrangements will be apparent to those skilled in the art having reference to this specification.

In any event, it is important that modem 14 ensure that sufficient bandwidth is available to service all of the guaranteed data rate channels. In the example of Figures 6b and 8, this requires sufficient bandwidth to service both CBR channels CBR0, CBR1.

Referring back to Figure 8, priority scheduler 137 first determines whether the current VBR channel has met its data rate. If so, control passes to decision 193 for processing of UBR data, in this example. If the current VBR channel data rate has not yet been satisfied (decision 189 is NO), priority scheduler 137 then determines, in decision 191, whether any VBR channel contains unread data. If multiple VBR channels are currently connected (each with their own bulk endpoint 240'), each VBR channel is polled by decisions 189, 191. If unread data is present (decision 191 is YES), process 192 is then performed by transmit state machine 250 and segmentation state machine 260 to select the appropriate VBR endpoint (e.g., bulk endpoint 240'₂) and to await fetching of data from that location, following which control returns to decision 181 to repeat the processing of the CBR channels. According to this second preferred embodiment of the present invention, process 192 substantially subsumes the scheduling of all of the currently connected VBR channels, such scheduling being carried out according to conventional techniques.

If ABR transmissions are being carried out, alternatively or in addition to the CBR and VBR communications described above, the processing of ABR channels will follow substantially that described for VBR communications, but with different scheduling criteria to correspond to the ABR standards. Typically, such scheduling of transmissions among ABR channels is carried out according to a fairness algorithm, to prevent one or a few ABR channels from dominating the remaining available bandwidth to the exclusion of other ABR channels. Such scheduling will be executed by priority scheduler 137 determining which of the bulk endpoints 240' associated with a particular ABR channel is to be selected in each pass through the process.

In the example of Figures 6b and 8, only a single VBR channel is provided. This channel is associated with bulk endpoint 240'₂ in shared memory 44. In the event that no unread data are present at endpoint 240'₂ in shared memory 44 (decision 191 is NO), then any UBR channels may be serviced, beginning with decision 193. Decision 193 is executed by transmit state machine 250 in conjunction with priority scheduler 137 polling endpoint 240'ₙ in this example, to determine whether unread data is present thereat. If so, transmit state machine 250 then selects endpoint 240'ₙ in process 194 for access by transmit state machine 250 and segmentation state machine 260 for segmentation and eventual transmission. Upon completion of this access, or if no UBR data is present at endpoint 240'ₙ, control returns to decision 181 for the next instance of the process, beginning again with interrogation and processing of the CBR channels as discussed above.

According to this second preferred embodiment of the invention, the scheduling and transmission of ATM communications is handled by transmit controller 132 and priority scheduler 137 in modem 14. This management is executed through the selection of the endpoints 240' from which ATM packets are to be fetched for segmentation and transmission. Because ATM QoS scheduling is handled in the USB function according to the present invention, host 12 is relieved from itself scheduling ATM communications, and need only write the ATM data to the appropriate endpoints 240' in shared memory 44 that are associated with the connections being serviced. Accordingly, both the USB host and also the USB bus are efficiently utilized.

Referring back to Figure 5, and as described in copending application S.N. 09/507,383, filed February 18, 2000, and incorporated herein by this reference, the ATM transmission data written to endpoints 240' according to this second preferred embodiment of the invention preferably include both ATM header information and also the ATM packet payload itself. According to this embodiment of the invention, modem 14 executes the ATM segmentation of sixty-four byte USB packets (which are written to endpoints 240') into the fifty-three byte standard ATM cells, including generation of the ATM header for each cell; USB interface device 30 also receives and forwards the necessary "padding" of the ATM cells to fill the fifty-three byte cells, and also calculates and appends of the appropriate cyclic redundancy check (CRC) value to the packet. USB communication is thus made more efficient by not requiring the host to forward each copy of the ATM header over the USB bus, and by concatenating payload data into the maximum size sixty-four byte USB packets, thus greatly reducing the amount of null bytes over the USB bus.

As shown in Figure 5, segmentation state machine 260 is coupled to data transmit state machine 250, and performs segmentation operations as appropriate for the particular packet upon such bytes. Output data from segmentation state machine 260 are forwarded, by way of demultiplexer 266, to the appropriate one of byte buffers 268. The operation of segmentation state machine 260 is carried out in combination with header register 252, packet length register 254, and packet type register 256, each of which stores results useful in the generation of ATM headers. Segmentation state machine 260 also operates in cooperation with CRC logic 258, which performs CRC calculations to generate the CRC filler of the transmitted ATM packets. Additionally, cell counter 262 counts the number of ATM cells being generated by segmentation state machine 260 for the current packet, and byte counter 264 counts the number of bytes within the current ATM cell that have been processed by segmentation state machine 250.

Demultiplexer 266 receives each byte processed by segmentation state machine 260, and forwards it to the appropriate one of byte buffers 268. The contents of byte registers 268 are simultaneously received, as a thirty-two bit data word, by VBus state machine 270. In combination with word counter 274 and transmit configuration registers 272, VBus state machine 270 operates to apply the data word to bus VBus, and thus to transmit FIFO 35 in DSP 32 (Figure 2) over bus VBus and via VBUS-to-HPIF bridge 118 (if present, as in Figure 3).

Transmit controller 132 can process ATM data corresponding to any one of a number of formats, as described in the above-referenced copending application S.N. 09/507,383. These formats include AAL5 and OAM packets, as well as a PTI Null PDU that can support AAL1, AAL2, and AAL3/4 protocols. A transparent PDU, consisting of simply a fifty-three byte packet with seven bytes of header and forty-eight bytes of data, similar to a conventional ATM cell, may also be processed.

Referring now to Figure 9, the operation of ATM transmit controller 132, and particularly segmentation state machine 260 therein, in performing the segmentation of the ATM packet generated by host 12 into ATM cells for transmission via modem 14. This operation is performed once the appropriate endpoint 240' has been selected by one of processes 184, 188, 192, 194 illustrated in Figure 8. This permits segmentation state machine 260, according to this embodiment of the invention, to be concerned with handling only a single channel of ATM transmission at a time. Alternatively, multiple segmentation state machines 260 may be implemented to handle multiple channels at once, if desired.

The operation of ATM transmit controller 132 begins with decision 281, in which segmentation state machine 260 interrogates the state of byte buffers 268 to determine whether a location is available to which to forward another byte of packet data. If not (decision 281 is YES because byte buffers 268 are full), segmentation state machine 260 must wait until VBus state machine 270 reads the data word from the contents of byte buffers 268, following which decision 281 will return a NO result, permitting control to pass to decision 283.

As noted above, VBus state machine 270 writes the transmit data words to transmit FIFO 35 of DSP 32 independently from, and thus simultaneously with, the operation of segmentation state machine 260 described herein. This operation by VBus state machine 270 consists of requesting access to bus VBus and, upon receiving a grant of such access, reading the contents of byte buffers 268 as a transmit data word, and then presenting the transmit data word to bus VBus; as such, VBus state machine 270 operates substantially similarly with VBus state machine 70 of ATM receive controller 134 described hereinabove, except writing data to bus VBus rather than reading data therefrom. Similarly as described above, VBus state machine 70 maintains the current transmit FIFO address in its current FIFO address 276, so that the proper memory address may be presented in combination with the data word to be transmitted. VBus-to-HPIF bridge 118 then translates, or "bridges", this address and data information into the HPIF format comprehendible by DSP 32. Once VBus state machine 270 clears byte buffers 268, as noted above, decision 281 will return a NO result to indicate that space is available in byte buffers 268 for the next byte to be processed.

In decision 283, segmentation state machine 260 in combination with transmit state machine 250 determine whether new data is present at one of endpoints 240' and available for transmission. Decision 283 thus corresponds to the process of Figure 8, up to the point at which one of processes 184, 188, 192, 194 is to be executed. If no data is available at any of endpoints 240' (decision 283 is NO), segmentation state machine 260 must wait for such data to appear. At such time as data is written to endpoints 240' from host 12 for an ATM packet, decision 283 will return a YES result, and segmentation state machine 260 proceeds to execution of decision 285. This situation corresponds to one of processes184, 188, 192, 194 selecting the appropriate one of endpoints 240' in shared memory 44 according to the scheduling routine described above.

In decision 285, segmentation state machine 260 determines whether the ATM header for the current packet has yet been configured. Upon receiving the initial packet information, the ATM header will not have yet been configured. In this case (decision 285 is NO), segmentation state machine 260 copies the received ATM header and control information into its registers 252, 254, 256, shown in Figure 10. Specifically, the first four bytes of the seven-byte ATM header information read from the selected endpoint 240', corresponding to the GFC, VPI, and VCI connection information, are stored in header register 252, the fifth and sixth bytes corresponding to the length of the packet are written into length register 254, and the seventh byte corresponding to the packet type is written into packet type register 256. Following the storing of this information in registers 252, 254, 256, segmentation state machine 260 retains the information necessary for generation of the five-byte ATM cell headers for each ATM cell segmented and forwarded by ATM transmit controller 132. Control then passes to process 288, for transmission of header bytes to DSP 32, as will now be described relative to Figure 10.

As noted above and as well known in the art, conventional ATM cell headers are five bytes in length; however, only a thirty-two bit data word is communicated over bus VBus to bus HPIF, and thus to DSP 32. As such, the transmission of an ATM cell header requires two data words for complete transmission. However, as is also well known in the art, the fifth byte of an ATM cell header is dedicated for the HEC field, which will be generated by the transmission convergence layer at DSP 32. As such, while segmentation state machine 260 must generate a five byte ATM cell header, the fifth byte of this header is a null, or don't care, byte, prior to processing by DSP 32. Process 288 is thus a two-pass process, and begins with decision 311 in which segmentation state machine 260 determines whether the four-byte partial header has previously been transmitted to VBus state machine 270. If not (decision 311 is NO), control passes to decision 313.

In decision 313, segmentation state machine 260 determines, from the packet type ATM header information stored in packet type register 256, whether the current packet is an OAM packet. If so (decision 313 is YES), the transmitted packet will be a single cell packet, and as such control passes directly to process 314 by way of which segmentation state machine 260 transfers the first four bytes of the ATM cell header to byte buffers 268 via demultiplexer 266. As is known in the ATM art, these four bytes include the GFC, VPI, VCI, PTI, and CLP fields. Control then passes back to decisions 281 and 283 to wait for byte buffers 268 to clear and for selection of the next endpoint 240' to be processed.

If decision 313 is not an OAM or a transparent packet (decision 313 is NO), segmentation state machine 260 performs decision 315 to determine whether the last ATM cell is about to be transmitted for the current ATM packet. If so (decision 315 is YES), process 316 is performed by segmentation state machine 260 to rewrite the PTI field in the four-byte ATM header to include the end-of-packet indicator for that cell. In either case (decision 315 is NO, or following process 316), segmentation state machine 260 transfers the first four bytes of the ATM cell header to byte buffers 268, in process 314.

Following process 314, control passes back to decision 281 to await the reading of the previous header information from byte buffers 268. Once byte buffers 268 are read, and upon decision 283 returning a YES, indicating the presence of new data at endpoint 2401 decision 285 again returns a NO result since the header has not been completely configured and transmitted. Process 286 may be skipped for this second pass (considering that the ATM header information is already stored in registers 252, 254, 256) and control passes to decision 311 of process 288 which returns a YES result indicating that the four-byte partial header has already been set. Segmentation state machine 260 then transmits a null byte to one of byte buffers 268 (i.e., the zeroth byte) for eventual transmission to DSP 32. Control then returns back to decision 281 (which necessarily returns a NO result at this point), and decisions 283, 285 (each of which returns a YES result), following which segmentation state machine 260 next performs decision 287.

Decision 287 determines whether the current byte count value, which is stored in byte counter 264, has the value forty-eight, which is the maximum number of bytes of payload in an ATM cell, as is known in the art. If not (decision 287 is NO), the next byte of data to be processed will not be the final byte in the current ATM cell. Decision 293 is then performed by segmentation state machine 260 to determine whether the current ATM cell is the last cell in the ATM packet, by comparing the current value of cell counter 262 with a terminal cell count that may be derived from the current contents of length register 254; in this regard, since all OAM packets consist of only a single cell, a packet type identifier (register 256) indicating an OAM packet will also cause decision 293 to return a YES result.

If the current ATM cell being produced is not the last cell in the packet, process 294 is performed to cause transmit state machine 250 to fetch the next data byte from the selected endpoint 240' of shared memory 44; this next data byte is received by segmentation state machine 260, and CRC logic 258 initiates or continues the calculation of the CRC value for the current ATM packet. As discussed above relative to the receive and reassembly of ATM packets, AAL5 ATM packets include a trailer containing a thirty-two bit CRC checksum for the payload of all cells within the ATM packet. CRC logic 258 provides dedicated hardware for the calculation of this CRC checksum in an ongoing manner, effectively in parallel with the processing carried out by segmentation state machine 260. Following the fetch of the next data byte (but not necessarily the completion of the CRC calculation, as noted above), segmentation state machine 260 next increments the value of byte counter 264, in process 296, and then transfers the fetched data byte to the next open location in byte buffers 268. As noted above, VBus state machine 270 retrieves the contents of all four byte buffers 268, in the form of a thirty-two bit data word, once these buffers are filled. Whether read by VBus state machine 270 or not, after the transfer of the data byte to byte buffers 268, control passes back to decision 281, where segmentation state machine 260 determines whether an available byte buffer remains, and then whether data is present at the selected endpoint 240', as noted above.

If the current cell is the last cell in the ATM packet (i.e., decision 293 is YES), additional processing is required to generate trailing information, or at least to prepare ATM transmit controller 132 for the next packet. Decision 299 is first performed to determine whether the current cell corresponds to an AAL5 or OAM packet; if it is of neither type (decision 299 is NO), process 302 is then performed to simply fetch the next data byte from the selected endpoint 240'. If, on the other hand, the current packet is an AAL5 or OAM packet, process 300 is performed by segmentation state machine 260 to substitute the final CRC value (either CRC-32 or CRC-10, as the case may be) for the appropriate data portion of the cell. In either case (after process 302 or process 304, as the case may be), decision 303 is next performed to determine whether the current byte is the last byte in this the last cell of the packet. If not (decision 303 is NO), process 296 is performed to increment the byte count and the current byte is transferred to the appropriate byte buffer 268 in process 298, with control returning to decision 281 for receipt of the next byte.

Upon reaching the last byte of the cell (decision 303 is YES), the ATM packet may be completed. In process 304, the header and control configuration information stored in registers 252, 254, 256 is cleared by segmentation state machine 260, so that the next packet will have its own ATM cell headers configured and transmitted via decision 285 and processes 286, 288. The contents of byte counter 264 are cleared in process 306, and the contents of cell counter 262 are cleared in process 308. This final byte is then transferred to byte buffers 268, in process 298, and the transmission of the ATM packet is then complete. Control then returns to decisions 281, 283 to await the emptying of byte buffers 268 and the receipt of new data at endpoints 240, with the process then repeating for the next ATM packet.

According to this embodiment of the present invention, in addition to the advantages provided by the scheduling of ATM channels, significant advantages are obtained by the segmentation of ATM packets into ATM cells at the USB interface device, as described above. The USB bus is more efficiently utilized according to the present invention, as compared with conventional USB-based devices, because the ATM header information need only be communicated over the USB bus once according to the present invention; the segmentation logic in the USB interface device itself then generates the ATM cell headers. Secondly, the host is able to communicate the ATM packet payload by way of full USB packets (e.g., sixty-four byte bulk packets), without regard to ATM cell boundaries, as opposed to conventional devices in which the fifty-three byte ATM packets are transmitted within individual sixty-four byte USB packets with eleven null bytes. The computationally intensive operations of segmentation, CRC calculation, and the like are also performed in the USB peripheral according to the present invention, preferably in dedicated hardware, thus relieving the host from performing these functions in software. Accordingly, the development and implementation of host drivers for the ATM transmission is significantly facilitated by the present invention.

### Conclusion

According to the preferred embodiments of the invention described above, the USB function manages the priority scheduling of data communications. permitting the host to simply manage the memory address to which the communication data are to be written for each communication according to its priority. QoS capability permits the optimum use of the network bandwidth for the various types of communications and corresponding bit rates. The implementation of QoS functions and management in the USB function thus provides improved performance for the overall USB system.

While the present invention has been described according to its preferred embodiments, it is of course contemplated that modifications of, and alternatives to, these embodiments, such modifications and alternatives obtaining the advantages and benefits of this invention, will be apparent to those of ordinary skill in the art having reference to this specification and its drawings. It is contemplated that such modifications and alternatives are within the scope of this invention as subsequently claimed herein.

## Claims

1. A computer peripheral device for receiving communications from a host computer (12) and for transmitting the communications over a communications facility, comprising:
a USB port (12₁, 12₂, 12₃, 14₁, 16₁, 18₁) for coupling to the host computer by way of a Universal Serial Bus connection;
a communications interface (30) for forwarding message data to the communications facility; and
a USB interface (30), coupled to the USB port and to the communications interface (30), comprising:
shared memory (44), for buffering data to be transmitted over the communications facility, the shared memory (44) accessible at a plurality of endpoint locations;
a USB interface module (40), coupled to the USB port, for controlling access to the shared memory (44) at the plurality of endpoint locations by the host computer (12);
a transmit controller (132), for retrieving data from a selected one of the plurality of endpoints and for forwarding the retrieved portions to the communications interface; and
priority scheduling logic (137), coupled to the transmit controller (132), for selecting the one of the plurality of endpoint locations to be accessed by the transmit controller (132), according to a predetermined priority scheme.

2. The peripheral device of claim 1, wherein the USB interface further comprises:
a processing device, coupled to the transmit controller and to the communications interface, for processing data retrieved from the shared memory by the transmit controller into a format for transmission over the communications facility.

3. The peripheral device of claim 1, wherein the USB interface further comprises:
a memory, coupled to the priority scheduling logic, for storing information corresponding to the predetermined priority scheme.

4. The peripheral device of claim 3, wherein the priority scheduling logic comprises:
programmable logic, coupled to the memory, and operable responsive to the stored information corresponding to the predetermined priority scheme.

5. The peripheral device of claim 3, wherein the memory comprises:
a control register, for storing configuration information;
and wherein the priority scheduling logic comprises:
sequential logic, configurable by way of the contents of the control register.

6. The peripheral device of claim 1, wherein at least one of the plurality of endpoint locations in the shared memory is for receiving USB data transfers of the isochronous type.

7. The peripheral device of claim 6, wherein at least one of the plurality of the endpoint locations in the shared memory is for receiving USB data transfers of the bulk type.

8. The peripheral device of claim 6, wherein the communications correspond to a plurality of virtual channels under the Asynchronous Transfer Mode (ATM) protocol, each virtual channel associated with one of the plurality of endpoint locations in the shared memory;
and wherein the plurality of virtual channels are associated with a plurality of ATM Quality of Service (QoS) categories.

9. The peripheral device of claim 8, wherein a first one of the plurality of virtual channels is associated with a Constant Bit Rate (CBR) category;
and wherein the first one of the plurality of virtual channels is associated with one of the plurality of endpoint locations in the shared memory that is for receiving USB data transfers of the isochronous type.

10. The peripheral device of claim 1, wherein the communications are to be transmitted according to a connection-less protocol.

11. A method of transmitting a plurality of data messages from a host computer system to a communications facility by way of a Universal Serial Bus (USB) peripheral device, comprising the steps of:
for each of the plurality of data messages, operating the host computer to transfer data corresponding to the message to a shared memory in the USB peripheral device at a corresponding one of a plurality of endpoint locations;
selecting, by operating the USB peripheral device, individual ones of the plurality of endpoint locations for access according to a predetermined priority scheme; and
retrieving message data from the selected one of the plurality of endpoint locations, and forwarding the retrieved message data to the communications facility.

12. The method of claim 11, wherein the host computer transfers data for at least a second one of the data messages to the shared memory by way of a USB transfer of the bulk type.

13. The method of claim 11, wherein the host computer transfers data for at least a first one of the data messages to the shared memory by way of a USB transfer of the isochronous type.

14. The method of claim 13, wherein the selecting step comprises:
over a selected time interval, determining whether data retrieved from a first endpoint location corresponding to the first one of the data messages has satisfied a data rate level corresponding to the associated isochronous transfer;
responsive to the determining step determining that the data rate level has not been satisfied, then retrieving message data for the first one of the data messages from the first endpoint location and forwarding the retrieved message data to the communications facility; and
responsive to the determining step determining that the data rate level has been satisfied, then retrieving message data for the second one of the data messages from a corresponding endpoint location of the shared memory and forwarding the retrieved message data to the communications facility.

15. The method of claim 12, wherein the data messages are for transmission according to the Asynchronous Transfer Mode (ATM) protocol;
wherein the plurality of data messages are each associated with an ATM Quality of Service (QoS) category;
and wherein the first one of the data messages is associated with a Constant Bit Rate (CBR) QoS category.

16. The method of claim 15, wherein the second one of the data messages is associated with a Variable Bit Rate (VBR) QoS category.

17. The method of claim 15, wherein the selecting step comprises:
over a selected time interval, determining whether data retrieved from a first endpoint location corresponding to the first one of the data messages has satisfied a data rate level corresponding to the associated isochronous transfer;
responsive to the determining step determining that the data rate level has not been satisfied, then retrieving message data for the first one of the data messages from the first endpoint location and forwarding the retrieved message data to the communications facility; and
responsive to the determining step determining that the data rate level has been satisfied, then retrieving message data for the second one of the data messages from a corresponding endpoint location of the shared memory and forwarding the retrieved message data to the communications facility.

18. The method of claim 12, wherein the data messages are for transmission according to a connection-less protocol.

19. A computer system, comprising:
a host computer, having a host Universal Serial Bus (USB) port; and
a peripheral device according to any of claims 1 to 10.

20. The system of claim 19, wherein the communications are to be transmitted according to a connection-less protocol.
